(19) **Europäisches Patentamt / European Patent Office / Office européen des brevets**

(11) **EP 1 565 525 B1**

(12) **EUROPEAN PATENT SPECIFICATION**

(45) Date of publication and mention
of the grant of the patent:
**20.08.2014 Bulletin 2014/34**

(51) Int Cl.:
***C08L 23/08*** *(2006.01)*

(21) Application number: **03778523.5**

(22) Date of filing: **26.11.2003**

(86) International application number:
**PCT/GB2003/005149**

(87) International publication number:
**WO 2004/048468 (10.06.2004 Gazette 2004/24)**

(54) **USE OF POLYETHYLENE COMPOSITIONS**

VERWENDUNG VON POLYETHYLEN-MISCHUNGEN

UTILISATION DE COMPOSITIONS DE POLYETHYLENES

(84) Designated Contracting States:
**AT BE BG CH CY CZ DE DK EE ES FI FR GB GR HU IE IT LI LU MC NL PT RO SE SI SK TR**

(30) Priority: **27.11.2002 GB 0227666**

(43) Date of publication of application:
**24.08.2005 Bulletin 2005/34**

(73) Proprietor: **Borealis Technology Oy**
**06101 Porvoo (FI)**

(72) Inventors:
- **BAANN, Hege, Vale**
  **Fin-06101 Porvoo (FI)**
- **EGGEN, Svein, Staal**
  **3947 Langangen (NO)**
- **EKLIND, Hans**
  **FIN-06101 Porvoo (FI)**
- **HELLAND, Irene**
  **FIN-06101 Porvoo (FI)**

- **JOHANSSON, Solveig**
  **FIN-06101 Porvoo (FI)**
- **SULTAN, Bernt-Ake**
  **FIN-06101 Porvoo (FI)**
- **MALMBERG, Anneli**
  **FIN-06101 Porvoo (FI)**
- **NORD-VARHAUG, Katrin**
  **FIN-06101 Porvoo (FI)**
- **WALTER, Philipp**
  **10533 Irvington, New York (US)**

(74) Representative: **Campbell, Neil Boyd**
**Dehns**
**St Bride's House**
**10 Salisbury Square**
**London**
**EC4Y 8JD (GB)**

(56) References cited:
**EP-A- 1 041 090      EP-A- 1 201 713**
**WO-A-01/14122      US-A- 4 547 551**

**Description**

The invention relates to improvements in and relating to polyethylene (PE) compositions and PE products.

Polyethylene products, e.g. containers, film, pipes, cable jackets may be in use for prolonged periods, often in harsh environments and often subject to mechanical stress and shock. One measure of the ability of a polymer to produce blow moulded articles with the desired durability is the parameter known as environmental stress crack resistance (ESCR). Besides ESCR, other properties of the polymer are important, in particular processability, stiffness, pressure resistance, transparency, flexibility, density, shrinkage, mechanical strength, surface finish, impact resistance and other related properties.

While ethylene copolymers produced using single-site catalysts (e.g. metallocenes) in general show excellent mechanical properties (including ESCR and dart drop) due to their homogeneous comonomer incorporation, they have a relatively narrow molecular weight distribution which results in relatively poor processability (e.g. low shear thinning, low critical shear rate, flow defects, swell) in applications where a thin walled product is to be produced.

This problem has been addressed (e.g. by DOW) by introducing long chain branching in the polymer, for example by the use of bridged bis-indenyl metallocene catalysts, by the use of unbridged metallocenes in which one of the n-bonding rings is heterocyclic (e.g. a $C_3NB$ ring), or by the use of metallocenes in which the metal is complexed by a bifunctiona ligand comprising an $\eta$-bonding moiety coupled to a $\sigma$-bonding moiety.

US 4,547,551 discloses ethylene polymer blends with low levels of long chain branching. WO 01/14122 teaches production methods of bimodal high density polyethylene. EP 1041090 discloses production methods of high density polyethylene having a broad molecular weight distribution.

We have now found that the problem is better addressed by instead producing a bimodal polyethylene with a relatively small amount of a high molecular weight component which has a relatively high degree of short chain branching. As is known in the art, bimodal polymers can be produced by multi-stage polymerization reactions using the same or different catalysts, by a single stage polymerization reaction using two or more different catalysts, by the use of a single site (e.g. metallocene) catalyst in combination with another catalyst (e.g. a Ziegler Natty or chromium - type .catalyst) optionally on the same carrier, or by blending two or more separately produced polymers. The high _ molecular weight component with high short chain branching can be produced for example by the use of an unbridged bis-cyclopentadiehyl metallocene catalyst, e.g. bis (n-butylcyclopentadienyl) hafnium complexes. The resulting bimodal polyethylene has both good mechanical properties (e.g. high environmental stress crack resistance) and good processability (e.g. in terms of shear thinning, elasticity and swell) making it ideal for use in the production of relatively thin walled products as well as products which are subject to prolonged use or use in harsh environments.

Thus viewed from one aspect the invention provides a polyethylene composition according to claims 1 to 4 comprising 20 to 50% wt of a copolymer of ethylene and a $C_{3-20}$ alpha olefin comonomer and 50 to 80% wt of a lower weight average molecular weight ethylene polymer, the polyethylenes of said composition together having a density of 935 to 965 kg/m$^3$, a weight average molecular weight of 60000 to 300000 g/mol, an MFR$_{2.16}$ at 190°C of 0.1 to 10 g/10 min., preferably an MFR$_5$ at 190°C of at least 0.5 g/10 min (especially at least 0.7 g/10 min, e.g. up to 1.0 g/10 min), and a molecular weight distribution (MWD) of from 2.5 to 10 (preferably 3.5 to 10), said copolymer having a comonomer content of from 0.006 to 9 mol % and a degree of branching of 0.03 to 45 branches per 1000 carbons, and said ethylene polymer having a density of 939 to 975 kg/m$^3$ and a weight average molecular weight of 20000 to 200000 g/mol, and preferably being a homopolymer.

The weight average molecular weight of the copolymer will be selected to ensure that the overall polymer meets the molecular weight requirements specified. Typically the Mw of the copolymer as measured using a mixing rule will be smaller than or equal to z where

$$z = 10^{((x/((1/df)-((1-x)/dl)))-a)/b}$$

(where $a \geq 1106.5$, preferably 1106.5 - 1126.5, especially about 1116.5,
$b \geq -31.86$, preferably -28.86 to -31.86, especially about -29.86,

$$x = wh/(wl + wh),$$

wh =the weight percent of said copolymer as a percentage of the total weight of said polymer and said copolymer in the composition,
wl =the weight percent of said polymer as a percentage of the total weight of said polymer and said copolymer in the composition,

df =the density in kg/m$^3$ of the composition where it contains only said copolymer and said polymer, and
dl =the density in kg/m$^3$ of said polymer) While in some instances it may be possible to
measure the molecular weight of the copolymer directly, e.g. where the composition is prepared by mixing preprepared ethylene polymers, in certain circumstances this will not be possible. In this event, e.g. where the copolymer is produced in the second polymerization stage of a two stage polymerization reaction, the molecular weight may be calculated from the well known mixing rule.

$$Mwf = x. \; Mwh + (1-x) \; Mwl$$

where Mwf, Mwh and Mwl are the weight average molecular weights for the composition, the copolymer and the ethylene polymer and x is as defined above.

In practice, the molecular weight (Mw) of the copolymer will generally be in the range 150000 to 800000 g/mol, especially 250000 to 450000 g/mol.

The copolymer in the composition of the invention has a degree of branching (DB) value (as defined in equation (5) in Macromolecules 33:1254 (2000)) of 0.03 to 45 branches per thousand carbons, preferably 0.05 to 40, more preferably 0.07 to 30, especially 0.1 to 15.

Viewed from another aspect the invention provides a polyethylene composition as herein before described produced by polymerization of ethylene and a $C_{3-20}$ alpha olefin comonomer catalysed by an unbridged bis-cyclopentadienyl metallocene catalyst, the ethylene polymer and copolymer of said composition together having a molecular weight distribution of from 2.5 to 10 and a density of from 935 to 965 kg/m$^3$.

The polyethylene compositions may be prepared by blending separately prepared ethylene polymers; however preferably they are prepared in a single stage polymerization using two or more different catalysts or more preferably by two or more stage polymerization reactions, e.g. in one or more reactors, using one or more catalysts. Especially preferably they are prepared using at least two reactors arranged in series, for example as described in WO 92/12182, EP-A-778289 and WO 96/18662, particularly a slurry loop reactor followed by one or more gas phase reactors.

The composition contains a relatively lower molecular weight ethylene polymer and a relatively higher molecular weight ethylene copolymer.

While the relatively lower molecular weight polymer may be a copolymer of ethylene and a comonomer copolymerizable therewith (e.g. a $C_{3-20}$ alpha-olefin, more particularly a $C_{3-12}$ alpha-olefin, especially propylene), it is preferably an ethylene homopolymer. Where the lower molecular weight polymer is an ethylene copolymer it desirably has a comonomer content of up to 5 mol %, preferably up to 4 mol %, more preferably up to 1 mol %, especially preferably less than 0.5 mol %. Where the lower molecular weight polymer is a copolymer the degree of branching is preferably as low as possible, e.g. the polymer preferably has a degree of branching (DB)of less than 2.5.

Where the composition is produced using a two or more stage polymerization, the lower molecular weight polymer is preferably prepared before the higher molecular weight copolymer, e.g. using a slurry loop reactor followed by a gas phase reactor. In a preferred embodiment, a homopolymer is preferably prepared in a slurry loop reactor and the copolymer is thereafter preferably prepared in a gas phase reactor.

The higher molecular weight polymer is a copolymer of ethylene and a $C_{3-20}$ alpha olefin comonomer, preferably a $C_{4-20}$ comonomer, especially a $C_{4-10}$ comonomer.

The lower molecular weight polymer may be prepared using any single site catalyst capable of producing a homopolymer having the desired molecular weight and density characteristics. However it is preferred that an optionally bridged bis-η ligand metallocene catalyst be used, especially a non-bridged bis-cyclopentadienyl metallocene catalyst, in particular such a metallocene catalyst in supported (i.e. heterogeneous) form. The patent and scientific literature is replete with details of appropriate ethylene polymerization catalysts, their preparation and their use.

As mentioned above, the copolymer is preferably prepared using a non-bridged bis-cyclopentadienyl metallocene catalyst, e.g. a compound of formula I

$$(C_5R_5)_2 \; MX_a \qquad (I)$$

where each R independently is hydrogen or a hydrocarbyl, hydrocarbyloxy, hydrocarbylsilyl, or hydrocarbylsiloxy group; M is a transition metal, lanthanide or actinide, preferably a group 4 to 6 transition metal, more preferably a group 4 transition metal, especially hafnium or zirconium; X is a coordinating or non-coordinating moiety (e.g. a halide ion, hydrogen, bishydrocarbylamide or a hydrocarbyl group); and a is zero or a positive integer the value of which is such that the overall charge of $(C_5R_5)_2MX_a$ is zero.

Many such compounds of formula I are known from the scientific and patent literature from the past two decades.

Examples of identities for R include hydrogen, $C_{1-20}$ alkyl, $C_{2-20}$ alkenyl, $C_{2-20}$ alkynyl, $C_{3-12}$ cycloalkyl, $C_{6-20}$

aryl, $C_{1-4}$ alkyl-$C_{6-20}$ aryl, and $C_{6-20}$ aryl-$C_{1-4}$ alkyl. The alkenyl, alkynyl and alkyl moieties in such groups may be linear or branched.

Where the compound of formula I contains a hydrocarbyl group, this is preferably a $C_{1-20}$ alkyl or alkenyl group, more preferably a $C_{1-6}$ alkyl group. The $C_5R_5$ groups are preferably groups containing one or two $C_{1-6}$ alkyl R groups, especially methyl or n-butyl groups.

Particularly preferably the compound of formula I contains two $C_5R_5$ groups which are the same and in which at least one R is alkyl. One particularly preferred compound of formula I is $(nBu-Cp)_2Hf\ Cl_2$, the preparation of which is described in WO 99/29737 and EP-A-620229. Other preferred catalysts include bis (n-butyl cyclopentadienyl) hafnium or zirconium complexes, in particular complexes where two X groups are chlorine or where one X is chlorine and the other is $N(CH_3)_2$ (see WO 00/34341).

The catalyst for the ethylene polymerization is preferably supported (i.e. heterogeneous), e.g. on a porous inorganic or organic particulate, typically silica. The preparation of supported metallocene catalysts is described in WO 95/12622 for example.

The catalyst systems used in the preparation of the ethylene polymers may, as is conventional, include a co-catalyst or catalyst activator, e.g. an organoaluminium compound such as an alumoxane. The use of methylalumoxane (MAO) as a cocatalyst is preferred and it is also preferred that the catalyst system be prepared by impregnating a metallocene:alumoxane reaction product into a porous particulate support. This is conventional practice and is described for example in WO 95/12622.

Especially preferably the same catalyst system is used for the preparation of both the low and high molecular weight polymers, e.g. $(nBu-Cp)_2\ Hf\ Cl_2$/MAO/ailica.

The progression of the polymerization reactions may be controlled in conventional fashion so as to achieve production of polymers having the desired properties in the desired weight ratio. Thus temperature, pressure, monomer addition, hydrogen addition, reactor residence time, etc can be adjusted in conventional fashion so as to produce a composition with the desired characteristics.

Since ethylene feed stock may contain trace amounts of higher olefins, it will be appreciated that an - ethylene homopolymer may likewise have trace amounts of comonomer incorporated into its structure. Such -polymers are nonetheless considered by the industry to be ethylene homopolymers.

The weight ratio between the low and high molecular weight polymers is from 4:1 to 3:2.

The low molecular weight polymer has a density of 939-975 $kg/m^3$, preferably 950 to 973 $kg/m^3$. The weight average molecular weight is 20000 to 200000 g/mol, preferably 20000 to 150000g/mol. The $MFR_{2.16}$ (190°C) (measured according to ISO 1133) is preferably 0.6 to 800 g/10 min, more preferably 20 to 300g/10 min.

The higher molecular weight copolymer preferably has a density of 855-960 $kg/m^3$, more preferably 890 to 955 $kg/m^3$, especially 900 to 940 $kg/m^3$', particularly preferably a density below 930 $kg/m^3$. The $FRR_{21/5}$ of the higher molecular weight copolymer is preferably at least 19, e.g. 20 to 35, especially 22 to 25. The $MFR_{Zl·s}$ at 190°C of the copolymer is preferably at least 0.4 g/10 min, especially at least 0.45 g/10 min, e.g. 0.45 to 0.6 g/10 min. The comonomer is preferably a $C_{6-10}$ alpha olefin, especially 1- hexene or 1- octene. Comonomer incorporation is preferably 0.01 to 7 mol %, more preferably 0.05 to 5 mol %. Comonomer incorporation may be determined by FT-IR or NMR, e.g. as described by Randall in J. Macromol.Sci.- Macromol. Chem.Phys. C29:201(1989), or according to ASTM-D2238 92.

The polyethylene composition used according to the invention may contain further components besides the ethylene polymers, e.g. coloring agents, light protecting agents, antioxidants, fillers. These will generally form a minor part of the composition, typically no more than 10% wt of total composition weight. The composition will generally be prepared by pelletizing the ethylene polymers together with such additives if they are to be used. The compositions themselves form a further aspect of the invention.

The compositions may be used in conventional polymer product forming apparatus using conventional operating conditions. However the compositions are particularly suitable for production of thin-walled products, i.e. products with a wall thickness of 5 to 1000 $\mu$m, especially 8 to 600 $\mu$m. Typical thin-walled products which may be produced include containers (e.g. bottles, tanks etc), and films. For blow moulded thin walled items, the wall thickness will typically be 10 to 1000 $\mu$m, especially 300 - 600 $\mu$m. For film, the film thickness will typically be 5 to 300 $_A$m, preferably 5 to 100 $\mu$m, especially 8 to 40 $\mu$m. The polymer composition however may also advantageously be used for the preparation of other extruded, cast or moulded articles, e.g. tubes, pipes and cable jacketing. For pipes the wall thickness will typically be 0.3 to 200 mm, preferably 0.5 to 150 mm, especially 1 to 100 mm. For jacketing the wall thickness will typically be 0.2 to 5 mm, especially 1 to 3.5 mm.

The compositions are especially suited for use in blow moulding, in film production, and in the production of extruded articles, e.g. tubes or cable jackets. They may however also be used in rotomoulding, injection moulding, sheet casting and other techniques for production of polyethylene or polyethylene-containing products.

For blow moulding purposes, the composition of the invention preferably has a density (of the polyethylene components) of at least 939 $kg/m^3$, more preferably 950 to 963, especially 955 to 960. For film production the density of the polyethylene components of the composition of the invention is preferably at least 939 $kg/m^3$, especially 940 to

965, more especially 945 to 963. For jacketing production the density is preferably 939 to 955 kg/m$^3$, especially 940 to 950 kg/m$^3$. For pipe production the density is preferably 940 to 963 kg/m$^3$, especially 943 to 960 kg/m$^3$.

For blow moulding purposes, the composition of the invention preferably has a weight average molecular weight of the polyethylene components of 100000 to 200000, especially 120000 to 190000 g/mol. For film production the weight average molecular weight of the polyethylene components is preferably 65000 to 230000, more preferably 80000 to 190000 g/mol. For jacketing it is preferably 100000 to 200000, more preferably 110000 to 180000 g/mol. For pipe it is preferably 80000 to 280000, more preferably 100000 to 230000 g/mol.

For blow moulding purposes, the composition of the invention preferably has a MWD (of the polyethylene components) of 3.5 to 10, more preferably 5 to 8. For film the MWD is preferably 3.5 to 15, more preferably 3.5 to 9. For jacketing the MWD is preferably 3.5 to 10, more preferably 4 to 9. For pipe the MWD is preferably 3 to 10, more preferably 3.5 to 8.

For blow moulding moreover, the polyethylene components of the composition of the invention preferably have an eta 300 value (measured as described below) of 500 to 1500 Pa.s and an eta 0.05 value of 1300 to 80000 Pa.s. The eta 300 value is more preferably less than the sum of 820 Pa.s and one fortieth of the eta 0.05 value, more preferably less than the sum of 820 Pa.s and (1/80) x eta 0.5. The eta 0.05 value is more preferably 20000 to 60000 Pa.s. Also for blow moulding applications, the polyethylene components of the composition of the invention preferably have a tan 300 (i.e. tan(delta) at 300 rad/s) value of 0.4 to 0.9 and a tan 0.05 (i.e. tan(delta) at 0.05 rad/s) value of 0.3 to 7 (measured as described below). The tan 300 value is more preferably at least 0.009 times the tan 0.05 value plus 0.29. The tan 0.05 value is preferably 0.3 to 5. Tan 300 and tan 0.05 reflect the elasticity balance at higher and lower shear rates, a lower value indicating higher elasticity.

For jacketing purposes, the polyethylene components of the composition of the invention preferably have an eta 300 value (measured as described below) of less than 1000, more preferably less than 900 Pa.s. and an eta 0.05 value of less than 130000, more preferably less than 120000 Pa.s, e.g. 10000 to 80000 Pa.s.

The low molecular weight polyethylene component of the compositions used for blow moulding or film or pipe production preferably has a density of 950 to 975 kg/m$^3$, especially 960 to 973 kg/m$^3$. For jacketing production this density is preferably 950 to 973 kg/m$^3$, especially 955 to 973 kg/m$^3$.

The low molecular weight polyethylene component of the compositions used for blow moulding preferably has a weight average molecular weight of 20000 to 150000 g/mol, especially 25000 to 75000 g/mol. For film production this weight average molecular weight is preferably 20000 to 150000 g/mol, especially 30000 to 100000 g/mol. For jacketing production this weight average molecular weight is preferably 20000 to 150000 g/mol, especially 25000 to 70000 g/mol. For pipe production this weight average molecular weight is preferably 25000 to 150000 g/mol, especially 30000 to 100000 g/mol.

For use in blow moulding, the low molecular weight polyethylene component of the compositions of the invention preferably constitutes 55 to 75% wt of the polyethylene content, especially 58 to 68% wt. For use in film or jacketing production this percentage is preferably 50 to 75% wt, especially 50 to 70% wt. For use in pipe production, this percentage is preferably 50 to 70% wt, especially 50 to 60% wt.

For use in blow moulding the compositions of the invention preferably have an ESCR value of at least 60 hours, more preferably at least 80 hours, especially at least 100 hours. The stiffness is preferably at least 1000 MPa, more preferably at least 1100 MPa, especially at least 1200 MPa.

For use in pipe formation, the compositions of the invention preferably have a CTL value of at least 5000 hours, especially at least 10000 hours.

For use in pipe formation, the composition according to the invention preferably has a density of less than 945 kg/m$^3$. For this use the composition preferably has an eta 0.05 value of less than 130000 Pa.s, especially less than 120000, more preferably less than 80000, e.g. 10000 to 80000, particularly 20000 to 40000 Pa.s. Likewise the composition preferably has an eta 300 value of less than 1000 Pa.s, more preferably less than 900 Pa.s, e.g. 600 to 800 Pa.s. Tan 0.05 is preferably less than 7 and tan 300 is preferably less than 0.9.

For use in jacketing production, the compositions of the invention preferably have an ESCR value of at least 2000 hours.

For use in film production the compositions of the invention preferably have a dart drop (F50) of at least 20 (tested on a 20-30 $\mu$m film).

Viewed from a further aspect the invention provides a process for the production of a polyethylene article which comprises extruding, casting or moulding, preferably blow moulding, a polyethylene composition, as herein before described.

The process of the invention may additionally include post extrusion or moulding steps, e.g. cutting or removal of waste material from the extruded or moulded article, combination of the article with a complementary item (e.g. a lid or outer or inner casing or lining), filling of the article, lamination of the article, labelling and packaging of the article.

Viewed from a yet further aspect the invention provides a polyethylene article produced by a process according to the invention.

The invention will now be illustrated further with reference to the following non-limiting Examples.

$MFR_x$ is determined according to ISO 1133 at 190°C under an x kg load.

ESCR (F20) was determined according to ASTM D1693, Cond. B.

Constant tensile load (CTL) measurements at 5.0 MPa, described in ISO 6252 may also be used to determine ESCR.

Flexural modulus was determined according to ISO 54852-Z4.

Tensile modulus (stiffness) was determined according to ISO 527-2.

Mw and MWD (Mw/Mn) were determined by means of SEC. The SEC analyses were carried out using a Waters 150 CV plus no. 1115 (detector: refractive index (RI) and viscosity detector) calibration: narrow molecular weight distribution PS1. The columns used were 3 HT6E styragel from Waters (140°C).

Dart drop was determined according to ISO 7765/1.

Density was determined according to ISO 1183-1987 (E)

Rheology was determined using a Rheometrics RDA II Dynamic Rheometer under a nitrogen atmosphere using the Dynamic Frequency Sweep Default Test. This involved a plate and plate fixture, 12mm gap, 25mm diameter, temperature 190°C, frequency range 0.126-300 rad/s, point/decade 5, strain 5-15%, sample delay time 200s and a sample which was a pressed plaque of diameter 25-30mm and 1.5mm thickness. The resulting measurements were storage modulus (G'), loss modulus (G"), loss tangent (tan(delta) - G"/G'), and absolute value of complex viscosity (eta*) as a function of frequency $\omega$), eta* = (G'$^2$ + G"$^2$)$^{0.5}$. According to the Cox-Merz rule, the complex viscosity function is the same as the conventional viscosity function (i.e. viscosity as a function of shear rate) if the frequency is expressed as rad/s. eta 300 and eta 0.05 (i.e. eta* at 300 rad/s and 0.05 rad/s respectively) can be used to indicate the processability of a polymer composition. Reduction in eta 300 indicates increased shear thinning and thus improved flowability of the polymer melt under processing and hence higher output. Increased eta 0.05 indicates higher melt strength and elasticity of the polymer melt.

## Example 1

Ethylene polymer production

Ethylene homopolymers and an ethylene/1-hexene copolymer were produced in a 17L reactor with continuous hydrogen and ethylene feed using (nBuCp)$_2$HfCl$_2$/MAO, loaded onto a 40 $\mu$m silica carrier (129% wt loading), as catalyst.

The carrier used was 55SJ silica having an average particle size of about 40 $\mu$m. Loading was effected at an Al/Hf molar ratio of 200 to a level of 0.0354 mol Hf/kg silica.

The catalyst was transferred into the reactor while purging with nitrogen, whereafter isobutane was added. Ethylene or ethylene plus hydrogen were then fed to the reactor. The total pressure was kept constant. After 1.5 h (1 hour for Polymer B) the reactor content was emptied into a flash tank, in which the polymer powder was dried at 50°C for approximately 40 min with 6 m$^3$ of nitrogen.

Three polymers were produced in this way. They had the following properties.

| Polymer | A | B | C |
|---|---|---|---|
| MFR$_{2.16}$ at 190°C (g/10 min) | 48 | 0.01 | 93 |
| M$_w$ (g/mol) | 46000 | 405000 | 42000 |
| Density (kg/m$^3$) | 968 | 908.4 | 971 |
| MWD | 4.2 | - | 3.8 |
| DB (per 1000 C) | - | 5.5 | - |

In the preparation of these polymers, the following reactor conditions were used:

| Polymer | A | B | C |
|---|---|---|---|
| Catalyst (g) | 5.1 | 4.9 | 5.35 |
| Hydrogen (ppm in ethylene) | 2900 | 0 | 3700 |
| Isobutane (mL) | 4800 | 8200 | 8200 |
| Ethylene partial pressure (bar) | 7.5 | 6.5 | 7.5 |

(continued)

| Polymer | A | B | C |
|---|---|---|---|
| Reactor Temperature (°C) | 90 | 80 | 90 |
| Comonomer | None | 4% Hexene | None |
| Pressure (bar) | 25.7 | 21 | 25.7 |

## Example 2

Ethylene copolymer production

Ethylene copolymers were produced in an 8L reactor at 50°C with continuous hydrogen, 1-hexene and ethylene feed using $(nBuCp)_2HfCl_2/MAO$ loaded onto a 40 $\mu$m silica carrier (129% wt loading), as catalyst. The catalyst was transferred into the reactor while purging with nitrogen, whereafter isobutane was added. Then ethylene containing 1-hexene was fed to the reactor. The total pressure was kept constant at 20 bar (24.2 bar for Polymer F). After 1 h the reactor content was emptied into a flash tank, in which the polymer powder was dried at 50°C for approximately 40 min with 6 $m^3$ of nitrogen.

Three polymers were produced having the following properties:

| Polymer | D | E | F |
|---|---|---|---|
| $MFR_{2.16}$ at 190°C (g/10 min) | - | 0.07 | 96 |
| $M_w$ (g/mol) | 315000 | 285000 | 40000 |
| Density ($kg/m^3$) | 931 | 916 | 960 |
| DB (per 1000 C) | 0.6 | 6 | |
| MWD | 2.5 | 2.6 | 3.6 |

In the preparation of the polymers, the following reactor conditions were used:

| Polymer | D | E | F |
|---|---|---|---|
| Catalyst (g) | 4.65 | 3.55 | 3.55 |
| Hexene (wt % in isobutane) | 0.8 | 2.5 | 0.4 |
| Isobutane (mL) | 3800 | 3800 | 3800 |
| Reactor Temperature (°C) | 50 | 65 | 65 |
| Hydrogen (ppm in ethylene) | 0 | 0 | 3100 |

## Example 3

Blow moulding composition production

A composition was prepared by mixing polymers A and D of Examples 1 and 2 in a twin screw extruder with counterrotating screws (Clextral BC 21, 42L/D, 2.5 mm) equipped with a mixing die (see WO 00/01473).

The composition had the following properties:

| | |
|---|---|
| Copolymer content (% wt) | 36 |
| $MFR_{2.16}$ (g/10min) | 0.6 |
| $MFR_{21}$ (g/10 min) | 36 |
| Mw (g/mol) | 160000 |
| MWD | 6.8 |
| eta 300 (Pa.s) | 731 |

(continued)

| | |
|---|---|
| eta 0.05 (Pa.s) | 21634 |
| ESCR (hours) | 110 |
| Stiffness (MPa) | 1200 |
| Density (kg/m$^3$) | 956.7 |
| Tan 300 | 0.68 |
| Tan 0.05 | 2.32 |

## Example 4

Wire and Cable Jacketing Composition

A composition was prepared by mixing E and F of Example 2 in the manner described in Example 3. This composition had the following properties:

| | |
|---|---|
| Copolymer content (% wt) | 40 |
| Mw (g/mol) | 135000 |
| MWD | 7.9 |
| MFR$_{2.16}$ (g/10 min) | 0.8 |
| Density (kg/m$^3$) | 943 |
| ESCR (hours) | > 2000 |
| MFR$_{21}$ (g/10 min) | 44 |
| eta 300 (Pa.s) | 660 |
| eta 0.05 (Pa.s) | 13650 |

## Example 5

A composition for pipe formation was prepared by mixing Polymers B and C of Example 1 as described in Example 3. The composition had the following properties:

| | |
|---|---|
| Density (kg/m$^3$) | 944.6 |
| CTL 5.0 MPa[h] | >800 (re-evaluated as >5200) |
| eta 300 (Pa.s) | 758 |
| eta 0.05 (Pa.s) | 30549 |
| tan 300 | 0.49 |
| tan 0.05 | 6.30 |
| copolymer content (i.e. high Mw polymer) | 40% wt |

## Claims

1.    A polyethylene composition comprising 20 to 50% wt of a copolymer of ethylene and a C$_{3-20}$ alpha olefin comonomer and 50 to 80% wt of a lower weight average molecular weight ethylene polymer, the polyethylenes of said composition together having a density of 935 to 965 kg/m$^3$(ISO 1183), a weight average molecular weight of 60000 to 300000 g/mol, an MFR$_{2.16}$ at 190°C of 0.1 to 10 g/10 min. (ISO 1133), and a molecular weight distribution (MWD) of from 2.5 to 10 (SEC), said copolymer having a comonomer content of from 0.006 to 9 mol % and a degree of branching of 0.03 to 45 branches per 1000 carbons, and said polymer having a density of 939 to 975 kg/m$^3$ (ISO 1183) and a weight average molecular weight of 20000 to 200000 g/mol (SEC).

2.    A polyethylene composition as claimed in claim 1 wherein said copolymer is produced using an unbridged bis-cyclopentadienyl metallocene catalyst.

3. A composition as claimed in any one of claims 1 to 2 having an eta 300 value of 500 to 1500 Pa.s and an eta 0.05 value of 1300 to 80000 Pa.s.

4. A composition as claimed in any one of claims 1 to 2 having an eta 300 value of less than 1000 Pa.s and an eta 0.05 value of less than 130000 Pa.s.

5. A process for the production of a polyethylene article which comprises extruding, casting or moulding a polyethylene composition as claimed in claim 1 or 2.

6. A process as claimed in claim 5 which comprises blow moulding said composition.

7. A polyethylene article of a polyethylene composition as claimed in claim 1.

8. An article as claimed in claim 7 being a blow moulded article.

9. An article as claimed in claim 7 being a tube, cable jacket, injection moulded article, rotomoulded article or sheet.

**Patentansprüche**

1. Polyethylenzusammensetzung, umfassend 20 bis 50 Gew.-% eines Copolymers aus Ethylen und einem $C_{3-20}$ alpha-Olefin-Comonomer und 50 bis 80 Gew.-% eines Ethylenpolymers mit niedrigerem Gewichtsmittel des Molekulargewichts, wobei die Polyethylene der Zusammensetzung zusammen eine Dichte von 935 bis 965 kg/m$^3$ (ISO 1183), ein Gewichtsmittel des Molekulargewichts von 60000 bis 300000 g/mol, einen $MFR_{2,16}$ bei 190°C von 0,1 bis 10 g/10 min (ISO 1133) und eine Molekulargewichtsverteilung (MWD) von 2,5 bis 10 (SEC) aufweisen, wobei das Copolymer einen Comonomer-Gehalt von 0,006 bis 9 Mol-% und einen Verzweigungsgrad von 0,03 bis 45 Verzweigungen pro 1000 Kohlenstoffatome aufweist und das Polymer eine Dichte von 939 bis 975 kg/m$^3$ (ISO 1183) und ein Gewichtsmittel des Molekulargewichts von 20000 bis 200000 g/mol (SEC) aufweist.

2. Polyethylenzusammensetzung gemäß Anspruch 1, wobei das Copolymer unter Verwendung eines unverbrückten bis-Cyclopentadienyl-Metallocen-Katalysators hergestellt wird.

3. Zusammensetzung gemäß einem der Ansprüche 1 bis 2, welche einen eta 300-Wert von 500 bis 1500 Pa·s und einen eta 0,05-Wert von 1300 bis 80000 Pa·s aufweist.

4. Zusammensetzung gemäß einem der Ansprüche 1 bis 2, welche einen eta 300-Wert von weniger als 1000 Pa·s und einen eta 0,05-Wert von weniger als 130000 Pa·s aufweist.

5. Verfahren zur Herstellung eines Polyethylengegenstands, welches Extrudieren, Gießen oder Formen einer Polyethylenzusammensetzung gemäß Anspruch 1 oder 2 umfasst.

6. Verfahren gemäß Anspruch 5, welches Blasformen der Zusammensetzung umfasst.

7. Polyethylengegenstand aus einer Polyethylenzusammensetzung gemäß Anspruch 1.

8. Gegenstand gemäß Anspruch 7, welcher einen blasgeformten Gegenstand darstellt.

9. Gegenstand gemäß Anspruch 7, welcher ein Rohr, einen Kabelmantel, einen spritzgegossenen Gegenstand oder eine Folie darstellt.

**Revendications**

1. Composition de polyéthylène comprenant 20 à 50 % en poids d'un copolymère d'éthylène et d'un comonomère d'alpha oléfine en $C_{3-20}$ et 50 à 80 % en poids d'un polymère d'éthylène de masse moléculaire moyenne en poids inférieure, les polyéthylènes de ladite composition ayant ensemble une densité de 935 à 965 kg/m$^3$ (ISO 1183),

une masse moléculaire moyenne en poids de 60 000 à 300 000 g/mol, un $MFR_{2,16}$ à 190 °C de 0,1 à 10 g/10 min (ISO 1133), et une distribution de masse moléculaire (MWD) de 2,5 à 10 (SEC), ledit copolymère ayant une teneur en comonomère de 0,006 à 9 % en mole et un degré de ramification de 0,03 à 45 branches par 1 000 carbones, et ledit polymère ayant une densité de 939 à 975 kg/m³ (ISO 1183) et une masse moléculaire moyenne en poids de 20 000 à 200 000 g/mol (SEC).

2. Composition de polyéthylène selon la revendication 1, dans laquelle ledit copolymère est produit en utilisant un catalyseur au bis-cyclopentadiényle métallocène non ponté.

3. Composition selon l'une quelconque des revendications 1 à 2 ayant une valeur êta 300 de 500 à 1 500 Pa.s et une valeur êta 0,05 de 1 300 à 80 000 Pa.s.

4. Composition selon l'une quelconque des revendications 1 à 2 ayant une valeur êta 300 de moins de 1 000 Pa.s et une valeur êta 0,05 de moins de 130 000 Pa.s.

5. Processus pour la production d'un article de polyéthylène qui comprend l'extrusion, la coulée ou le moulage d'une composition de polyéthylène selon la revendication 1 ou 2.

6. Processus selon la revendication 5 qui comprend le moulage par soufflage de ladite composition.

7. Article de polyéthylène d'une composition de polyéthylène selon la revendication 1.

8. Article selon la revendication 7 étant un article moulé par soufflage.

9. Article selon la revendication 7 étant un tube, une gaine de câble, un article moulé par injection, un article ou une feuille moulé à la tournette.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4547551 A
- WO 0114122 A
- EP 1041090 A
- WO 9212182 A
- EP 778289 A
- WO 9618662 A

- WO 9929737 A
- EP 620229 A
- WO 0034341 A
- WO 9512622 A
- WO 0001473 A


**Non-patent literature cited in the description**

- *Macromolecules,* 2000, vol. 33, 1254

- **RANDALL.** *J. Macromol.Sci.- Macromol. Chem.Phys.,* 1989, vol. C29, 201